# EUROPEAN PATENT APPLICATION

(11) **EP 4 443 456 A1**
(43) Date of publication of application: **09.10.2024**
(21) Application number: 23217100.9
(22) Date of filing: 15.12.2023
(51) Int. Cl.: H01G 4/30, H01G 4/012, H01G 4/008, H01G 4/12, H01G 4/232

(54) **ELECTRONIC COMPONENT**

(30) Priority: 10.03.2023 KR 20230031997
(71) Applicant: Samsung Electro-Mechanics Co., Ltd., Suwon-si, Gyeonggi-do 16674 (KR)
(72) Inventor: You, Myunghwa, Suwon-si, Gyeonggi-do 16674 (KR)
(74) Representative: Grünecker Patent- und Rechtsanwälte PartG mbB

(57) **Abstract**

An electronic component includes a capacitor body, and first and second external electrodes respectively positioned at two opposite ends of the capacitor body opposing each other in a first direction. The capacitor body includes internal electrodes disposed in a stacking direction with a dielectric layer interposed therebetween. The internal electrodes each include an electrode portion, and a lead-out portion extending from the electrode portion toward one of the first and second external electrodes and divided into at least two parts by a slit. The internal electrodes include first and second electrode groups alternately disposed in the stacking direction and respectively connected to the first and second external electrodes. The lead-out portions of the two internal electrodes disposed adjacent to each other in the stacking direction in the first or second electrode group are positioned in a staggered manner in a second direction orthogonal to the first direction.

## Description

### TECHNICAL FIELD

The present disclosure relates to an electronic component, and more particularly, to a multilayer ceramic capacitor.

### BACKGROUND

A multilayer ceramic capacitor (MLCC) refers to a chip-shaped condenser mounted on a circuit board of various types of electronic products and configured to be charged with electricity or discharged. The multilayer ceramic capacitor has a structure in which internal electrodes having opposite polarities are alternately stacked one by one with dielectric layers (ceramic layers) interposed therebetween. The multilayer ceramic capacitor is advantageous in miniaturization, and the capacitance of the multilayer ceramic capacitor may be increased in proportion to the number of stacked dielectric layers and internal electrodes, thereby implementing a high capacity.

The dielectric layer may include BaTiOs, CaZrOs, SrZrOs, or the like as a main component. The internal electrode may include nickel (Ni) or copper (Cu) as a main component. Silver (Ag) is the best material for the internal electrode in terms of electrical conductivity, but nickel (1453°C) or copper (1084°C), which has a relatively high melting point, may be applied to reduce a difference in contraction percentage between the internal electrode and the dielectric layer during a sintering process.

Even though the material of the internal electrode is selected as described above, there may be a difference in contraction percentage between the dielectric layer and the internal electrode when the sintering process is performed during a process of manufacturing the multilayer ceramic capacitor, and a crack may be formed in an interface between the dielectric layer and the internal electrode because of residual stress caused by the difference in contraction percentage.

### SUMMARY

The present disclosure has been made in an effort to provide an electronic component capable of reducing residual stress, which is caused by a difference in contraction percentage between a dielectric layer and an internal electrode during a sintering process, thereby suppressing the occurrence of a crack in an interface between the dielectric layer and the internal electrode.

However, the object to be achieved by the embodiments of the present disclosure is not limited to the above-mentioned object but may be variously expanded without departing from the technical spirit of the present disclosure.

An electronic component according to one embodiment includes a capacitor body, and first and second external electrodes respectively positioned at two opposite ends of the capacitor body opposing each other in a first direction. The capacitor body includes a dielectric layer, and a plurality of internal electrodes disposed to be spaced apart from one another in a stacking direction with the dielectric layer interposed therebetween. The plurality of internal electrodes each include an electrode portion, and a lead-out portion extending from the electrode portion toward a corresponding one of the first and second external electrodes and divided into at least two parts by a slit. The plurality of internal electrodes include a first electrode group and a second electrode group alternately disposed in the stacking direction and respectively connected to the first and second external electrodes. The lead-out portions of the two internal electrodes disposed adjacent to each other in the stacking direction in the first electrode group are positioned in a staggered manner in a second direction orthogonal to the first direction, and the lead-out portions of the two internal electrodes disposed adjacent to each other in the stacking direction in the second electrode group are positioned in a staggered manner in the second direction orthogonal to the first direction.

The lead-out portions of the two internal electrodes, of the same one of the first electrode group and the second electrode group, disposed adjacent to each other in the stacking direction, may not overlap in the stacking direction.

The at least two parts of the lead-out portion, which are divided by the slit, may be disposed at a distance in the second direction.

The plurality of internal electrodes may include a plurality of first internal electrodes included in the first electrode group, and a plurality of second internal electrodes included in the second electrode group. The plurality of first internal electrodes may each include a first electrode portion, and a first lead-out portion extending from the first electrode portion toward the first surface. The plurality of second internal electrodes may each include a second electrode portion, and a second lead-out portion extending from the second electrode portion toward the second surface.

The first lead-out portions of the two first internal electrodes disposed adjacent to each other in the stacking direction may not overlap in the stacking direction, and the second lead-out portions of the two second internal electrodes disposed adjacent to each other in the stacking direction may not overlap in the stacking direction.

A width of each of the first lead-out portions may be less than or equal to half a width of the first electrode portion in the second direction, and a width of each of the second lead-out portions may be less than or equal to half a width of the second electrode portion in the second direction. The at least two parts of each of the first lead-out portions and the second lead-out portions, which are divided by the slit, may be positioned at a distance in the second direction.

The plurality of first internal electrodes may include odd-numbered first internal electrodes and even-numbered first internal electrodes depending on the stacking order. The first lead-out portions of the odd-numbered first internal electrodes may be positioned in one of left and right regions of the first surface, and the first lead-out portions of the even-numbered first internal electrodes may be positioned in the other of the left and right regions of the first surface.

The plurality of second internal electrodes may include odd-numbered second internal electrodes and even-numbered second internal electrodes depending on the stacking order. The second lead-out portions of the odd-numbered second internal electrodes may be positioned in one of left and right regions of the second surface, and the second lead-out portions of the even-numbered second internal electrodes may be positioned in the other of the left and right regions of the second surface.

The first lead-out portion of the odd-numbered first internal electrode and the second lead-out portion of the odd-numbered second internal electrode may face each other in the first direction. The first lead-out portion of the even-numbered first internal electrode and the second lead-out portion of the even-numbered second internal electrode may face each other in the first direction.

The slit may extend to the corresponding one of the first and second external electrodes.

An electronic component according to another embodiment includes a capacitor body, and first and second external electrodes respectively positioned at two opposite ends of the capacitor body. The capacitor body includes a dielectric layer, and a plurality of internal electrodes disposed to be spaced apart from one another in a stacking direction with the dielectric layer interposed therebetween. The plurality of internal electrodes each may include an electrode portion, and a lead-out portion extending from the electrode portion toward a corresponding one of the first and second external electrodes. The plurality of internal electrodes include a first electrode group and a second electrode group alternately disposed in the stacking direction and respectively connected to the first and second external electrodes. The lead-out portions of the three internal electrodes disposed adjacent to one another in the stacking direction in the first electrode group may be sequentially disposed at one side edge portion, the other side edge portion, and a central portion of the electrode portion in the stacking direction, and the lead-out portions of the three internal electrodes disposed adjacent to one another in the stacking direction in the second electrode group, may be sequentially disposed at one side edge portion, the other side edge portion, and a central portion of the electrode portion in the stacking direction.

The first and second external electrodes may be respectively positioned at two opposite ends of the capacitor body that face each other in a first direction. The one side edge portion, the central portion, and the other side edge portion may be positioned side by side in a second direction orthogonal to the first direction.

The capacitor body may include first and second surfaces that face each other in a first direction. The plurality of internal electrodes may include a plurality of first internal electrodes included in the first electrode group, and a plurality of second internal electrodes included in the second electrode group. The plurality of first internal electrodes may each include a first electrode portion, and a first lead-out portion extending from the first electrode portion toward the first surface. The plurality of second internal electrodes may each include a second electrode portion, and a second lead-out portion extending from the second electrode portion toward the second surface.

The first lead-out portions may include a first side lead-out portion configured to adjoin one side edge portion of the first electrode portion, a second side lead-out portion configured to adjoin the other side edge portion of the first electrode portion, and a first center lead-out portion configured to adjoin a central portion of the first electrode portion. The first side lead-out portion, the second side lead-out portion, and the first center lead-out portion may be positioned in a staggered manner in a second direction orthogonal to the first direction.

The second lead-out portions may include a third side lead-out portion configured to adjoin one side edge portion of the second electrode portion, a fourth side lead-out portion configured to adjoin the other side edge portion of the second electrode portion, and a second center lead-out portion configured to adjoin a central portion of the second electrode portion. The third side lead-out portion, the fourth side lead-out portion, and the second center lead-out portion may be positioned in a staggered manner in a second direction orthogonal to the first direction.

A width of each of the first side lead-out portion, the second side lead-out portion, and the first center lead-out portion may be less than or equal to one-third of a width of the first electrode portion in the second direction. A width of each of the third side lead-out portion, the fourth side lead-out portion, and the second center lead-out portion may be less than or equal to one-third of a width of the second electrode portion in the second direction.

The first side lead-out portion and the third side lead-out portion may face each other in the first direction, the second side lead-out portion and the fourth side lead-out portion may face each other in the first direction, and the first center lead-out portion and the second center lead-out portion may face each other in the first direction.

The lead-out portions of the three internal electrodes disposed adjacent to one another in the stacking direction in the first electrode group may not overlap in the stacking direction, and the lead-out portions of the three internal electrodes disposed adjacent to one another in the stacking direction in the second electrode group may not overlap in the stacking direction.

The electronic component according to the embodiment may disperse stress so that residual stress is not concentrated on the lead-out portion even though there occurs a difference in contraction percentage between the dielectric layer and the internal electrode during the sintering process. As a result, the electronic component according to the embodiment may prevent a crack from being formed in the interface between the dielectric layer and the internal electrode and improve durability and reliability.

### BRIEF DESCRIPTION OF THE DRAWINGS

FIG. 1 is a perspective view illustrating an electronic component according to the embodiment.
FIG. 2 is an exploded perspective view of a capacitor body of the electronic component illustrated in FIG. 1.
FIG. 3 is a cross-sectional view of the electronic component taken along line III-III' in FIG. 1.
FIG. 4 is a cross-sectional view of the electronic component taken along line IV-IV' in FIG. 1.
FIG. 5 is a left side view of the capacitor body of the electronic component illustrated in FIG. 1.
FIG. 6 is a right side view of the capacitor body of the electronic component illustrated in FIG. 1.
FIG. 7 is a perspective view illustrating an electronic component according to another embodiment.
FIG. 8 is an exploded perspective view of a capacitor body of the electronic component illustrated in FIG. 7.
FIG. 9 is a cross-sectional view of the electronic component taken along line IX-IX' in FIG. 7.
FIG. 10 is a cross-sectional view of the electronic component taken along line X-X' in FIG. 7.
FIG. 11 is a cross-sectional view of the electronic component taken along line XI-XI' in FIG. 7.
FIG. 12 is a left side view of the capacitor body of the electronic component illustrated in FIG. 7.
FIG. 13 is a right side view of the capacitor body of the electronic component illustrated in FIG. 7.

### DETAILED DESCRIPTION

Hereinafter, embodiments of the present disclosure will be described in detail with reference to the accompanying drawings so that those with ordinary skill in the art to which the present disclosure pertains may easily carry out the embodiments. In the drawings, a part irrelevant to the description will be omitted to clearly describe the present disclosure, and the same or similar constituent elements will be designated by the same reference numerals throughout the specification. Some constituent elements in the accompanying drawings are illustrated in an exaggerated or schematic form or are omitted. A size of each constituent element does not entirely reflect an actual size.

In addition, it should be interpreted that the accompanying drawings are provided only to allow those skilled in the art to easily understand the embodiments disclosed in the present specification, and the technical spirit disclosed in the present specification is not limited by the accompanying drawings, and includes all alterations, equivalents, and alternatives that are included in the spirit and the technical scope of the present disclosure.

The terms including ordinal numbers such as "first," "second," and the like may be used to describe various constituent elements, but the constituent elements are not limited by the terms. These terms are used only to distinguish one constituent element from another constituent element.

In addition, when one component such as a layer, a film, a region, or a plate is described as being positioned "above" or "on" another component, one component can be positioned "directly on" another component, and one component can also be positioned on another component with other components interposed therebetween. On the contrary, when one component is described as being positioned "directly above" another component, there is no component therebetween. In addition, when a component is described as being positioned "above" or "on" a reference part, the component may be positioned "above" or "below" the reference part, and this configuration does not necessarily mean that the component is positioned "above" or "on" the reference part in a direction opposite to gravity.

Throughout the specification, the terms "comprises," "comprising," "includes," "including," "containing," "has," "having" or other variations thereof are inclusive and therefore specify the presence of stated features, integers, steps, operations, elements, components, and/or combinations thereof, but do not preclude the presence or addition of one or more other features, integers, steps, operations, elements, components, and/or combinations thereof. Therefore, unless explicitly described to the contrary, the word "comprise/include" and variations such as "comprises/includes" or "comprising/including" will be understood to imply the inclusion of stated elements, not the exclusion of any other elements.

Throughout the specification, the word "in a plan view" means when an object is viewed from above, and the word "in a cross-sectional view" means when a cross section made by vertically cutting an object is viewed from a lateral side.

Throughout the specification, when one constituent element is referred to as being "connected to" another constituent element, one constituent element can be "directly connected to" the other constituent element, and one constituent element can also be "indirectly connected to," "physically connected to," or "electrically connected to" the other element with other elements therebetween. Further, the constituent elements are defined as different names according to positions or functions thereof, but the constituent elements may be integrated.

In the present specification, in describing the electronic component, a direction in which main components of the electronic component are stacked is defined as a 'stacking direction' that may be a 'thickness direction'. In addition, a direction parallel to a plane perpendicular to the stacking direction may be defined as a 'planar direction', and the planar direction may include a 'first direction' and a 'second direction' that are orthogonal to each other.

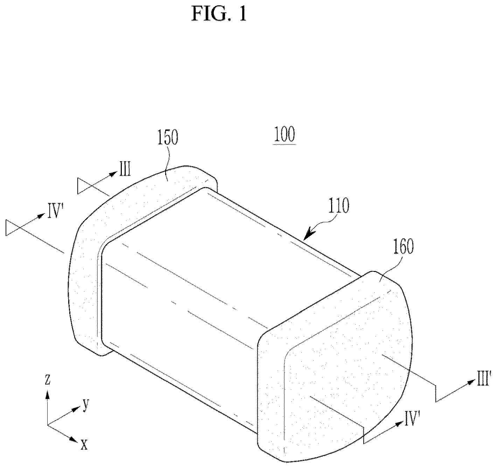

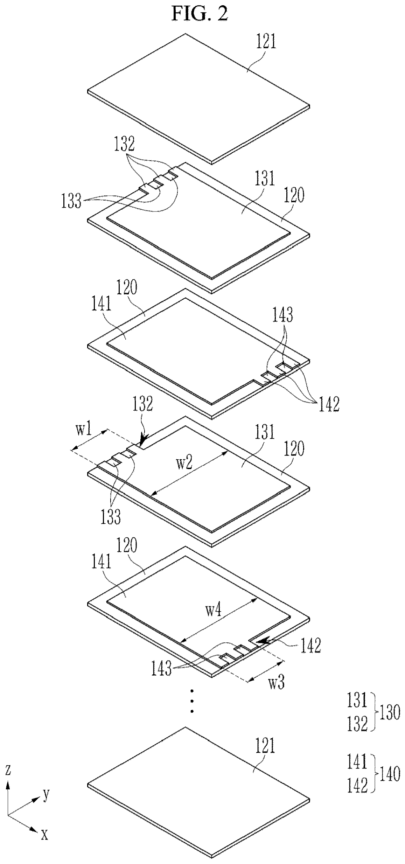

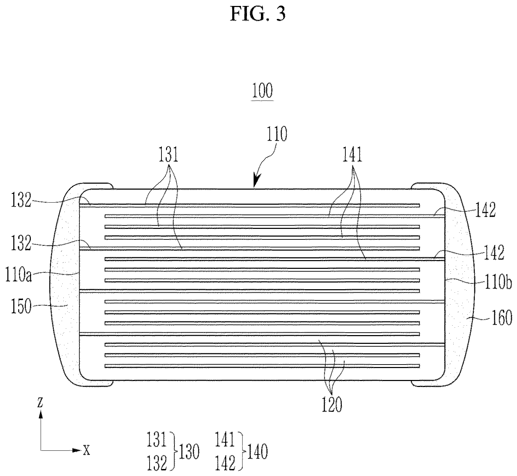

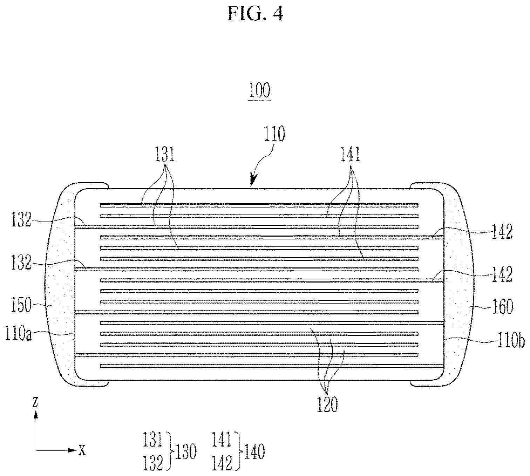

FIG. 1 is a perspective view illustrating an electronic component according to an embodiment, and FIG. 2 is an exploded perspective view of a capacitor body of the electronic component illustrated in FIG. 1. FIG. 3 is a cross-sectional view of the electronic component taken along line III-III' in FIG. 1, and FIG. 4 is a cross-sectional view of the electronic component taken along line IV-IV' in FIG. 1.

In the drawings, x direction is first direction, and y direction is second direction. The first direction may be a longitudinal direction of the capacitor body, and the second direction may be a width direction of the capacitor body. In the drawings, z direction may be a thickness direction of the capacitor body and defined as the stacking direction in which the main elements of the capacitor body are stacked.

With reference to FIGS. 1 to 4, an electronic component 100 according to an embodiment is a multilayer ceramic capacitor, and specifically includes a capacitor body 110, and a first external electrode 150 and a second external electrode 160 positioned at two opposite ends of the capacitor body 110. The first and second external electrodes 150 and 160 may be positioned at two opposite ends of the capacitor body 110 that face each other in the first direction (x direction).

The capacitor body 110 may include a plurality of dielectric layers 120, and a plurality of internal electrodes 130 and 140 disposed in the stacking direction (z direction) and spaced apart from one another with one dielectric layer 120 interposed therebetween. The plurality of internal electrodes 130 and 140 may include first and second internal electrodes 130 and 140 alternately positioned in the stacking direction. The plurality of first internal electrodes 130 may constitute a first electrode group, and the plurality of second internal electrodes 140 may constitute a second electrode group.

With reference to FIG. 2, the plurality of dielectric layers 120 may be disposed in the stacking direction. The first and second internal electrodes 130 and 140 may be alternately disposed one by one on each of the dielectric layers 120 in the stacking direction. As necessary, ceramic cover layers 121 may be additionally disposed at two opposite ends (uppermost and lowermost ends) of the capacitor body 110 based on the stacking direction. The ceramic cover layer 121 may include the same material as the dielectric layer 120.

The capacitor body 110 may be manufactured by disposing the plurality of dielectric layers 120 and the first and second internal electrodes 130 and 140 in the above-mentioned configuration and then performing a sintering process. In the capacitor body 110 that has been subjected to the sintering process, the plurality of dielectric layers 120 and the ceramic cover layer 121 may be integrated to the extent that boundaries therebetween cannot be identified.

The dielectric layer 120 may include a ceramic material having high permittivity. For example, the ceramic material may include dielectric ceramic containing substances such as BaTiOs, CaTiOs, SrTiOs, or GaZrOs. In addition, the ceramic material may further include auxiliary substances such as a Mn compound, a Fe compound, a Cr compound, a Co compound, and a Ni compound in addition to the above-mentioned substances. For example, the ceramic material may be (Ba₁₋ₓCaₓ)TiO₃, Ba(Ti_{1-y}Ca_{y})O₃, (Ba₁₋ₓCaₓ)(Ti_{1-y}Zr_{y})O₃, Ba(Ti_{1-y}Zr_{y})O₃, or the like made by partially applying Ca, Zr, or the like to BaTiO₃-based dielectric ceramic.

The first and second internal electrodes 130 and 140 may include conductive metal. For example, the conductive metal may include metal such as nickel (Ni), copper (Cu), palladium (Pd), or gold (Au), or an alloy thereof. In addition, the first and second internal electrodes 130 and 140 may further include dielectric particles having the same composition as the ceramic material included in the dielectric layer 120.

With reference to FIGS. 1 to 4, the capacitor body 110 may have an approximately hexahedral shape and include first and second surfaces 110a and 110b that face each other in the first direction. The first and second surfaces 110a and 110b may be two opposite left and right surfaces of the capacitor body 110. The first internal electrode 130 may include a first electrode portion 131, and a first lead-out portion 132 extending from the first electrode portion 131 toward the first surface 110a. The second internal electrode 140 may include a second electrode portion 141, and a second lead-out portion 142 extending from the second electrode portion 141 toward the second surface 110b. The first lead-out portion 132 may be exposed to the first surface 110a, and the second lead-out portion 142 may be exposed to the second surface 110b.

The first external electrode 150 may cover the first surface 110a of the capacitor body 110, and the second external electrode 160 may cover the second surface 110b of the capacitor body 110. The first external electrode 150 may be expanded toward the second surface 110b and additionally and partially cover two opposite upper and lower surfaces and two opposite front and rear surfaces of the capacitor body 110. The second external electrode 160 may be expanded toward the first surface 110a and additionally and partially cover two opposite upper and lower surfaces and two opposite front and rear surfaces of the capacitor body 110.

The first external electrode 150 is in contact with the first lead-out portion 132 exposed to the first surface 110a and electrically connected to the plurality of first internal electrodes 130. The second external electrode 160 is in contact with the second lead-out portion 142 exposed to the second surface 110b and electrically connected to the plurality of second internal electrodes 140. The portions of the first and second external electrodes 150 and 160, which partially cover the two opposite upper and lower surfaces and the two opposite front and rear surfaces of the capacitor body 110, may serve to increase the adhesion strength of the first and second external electrodes 150 and 160 to the capacitor body 110.

The first and second external electrodes 150 and 160 may each be configured as a single-layer film or a multilayer film having two or more layers. For example, the first and second external electrodes 150 and 160 may each have a two-layer structure including a first electrode layer, and a second electrode layer that covers the first electrode layer. The first electrode layer may be manufactured by a method such as dipping, printing, or transferring using conductive paste. The second electrode layer may be manufactured by a method such as sputtering or plating.

For example, the conductive paste used to manufacture the first electrode layer may include Cu as a main component and include glass powder and one or more substances among Ni, Sn, Pd, Pt, Au, Ag, W, Ti, Pb, and an alloy thereof. The first electrode layer may be manufactured by a method of dipping the capacitor body into the conductive paste and then drying the capacitor body, a method of printing the conductive paste on the capacitor body and then drying the capacitor body, or a method of transferring a dried film of the conductive paste onto the capacitor body.

The first electrode layer, which is manufactured by using the conductive paste, increases the density of the first and second external electrodes 150 and 160 while ensuring sufficient conductivity. Therefore, it is possible to effectively suppress the penetration of plating solution and/or outside moisture during a subsequent process of manufacturing the second electrode layer.

The second electrode layer may include Ni as a main component and further include one of Cu, Sn, Pd, Pt, Au, Ag, W, Ti, and Pb, or an alloy thereof. The second electrode layer may be manufactured by a method such as sputtering or electroplating and serve to improve structural reliability, durability, and heat resistance of the first and second capacitors.

Voltages with different polarities may be provided to the first external electrode 150 and the second external electrode 160. Therefore, the first internal electrode 130 and the second internal electrode 140 may have different polarities. When predetermined voltages are applied to the first and second external electrodes 150 and 160, electric charges are accumulated between the first internal electrode 130 and the second internal electrode 140. The capacitance of the electronic component 100 is proportional to an overlap area in which the first and second internal electrodes 130 and 140 facing each other in the stacking direction overlap each other.

In the electronic component 100 configured as described above, there is a difference in contraction percentage between the dielectric layer 120 and the first and second internal electrodes 130 and 140 during a process of sintering the capacitor body 110. To reduce the difference in contraction percentage, the first and second internal electrodes 130 and 140 may include nickel (Ni) or copper (Cu) as a main component having a relatively high melting point. Nevertheless, there is still a difference in contraction percentage between the dielectric layer 120 and the first and second internal electrodes 130 and 140, and residual stress may occur after the sintering process. The residual stress tends to be mainly concentrated on the first and second lead-out portions 132 and 142.

The electronic component 100 according to the embodiment includes a configuration for dispersing residual stress concentrated on the first and second lead-out portions 132 and 142. Specifically, the first internal electrode 130 may include the first electrode portion 131, and the first lead-out portion 132 extending from the first electrode portion 131 toward the first surface 110a and divided into at least two parts by a slit 133. The second internal electrode 140 may include the second electrode portion 141, and the second lead-out portion 142 extending from the second electrode portion 141 toward the second surface 110b and divided into at least two parts by a slit 143.

The first and second electrode portions 131 and 141 may each have a smaller size than the dielectric layer 120. An edge of each of the first and second electrode portions 131 and 141 may be positioned inside an edge of the dielectric layer 120 at a predetermined distance. The first electrode portion 131 and the second electrode portion 141 may overlap each other in the stacking direction and have the same size.

The first lead-out portion 132 may adjoin the first electrode portion 131 at one side edge directed toward the first surface 110a among the four edges of the first electrode portion 131. A width w1 of the first lead-out portion 132 in the second direction is smaller than a width w2 of the first electrode portion 131 in the second direction. For example, the width w1 of the first lead-out portion 132 may be less than or equal to half the width w2 of the first electrode portion 131. In case that the condition is satisfied, the first lead-out portions 132 of the two first internal electrodes 130, which are disposed adjacent to each other in the stacking direction, do not include portions that overlap each other in the stacking direction.

The second lead-out portion 142 may adjoin the second electrode portion 141 at one side edge directed toward the second surface 110b among the four edges of the second electrode portion 141. A width w3 of the second lead-out portion 142 in the second direction is smaller than a width w4 of the second electrode portion 141 in the second direction. For example, the width w3 of the second lead-out portion 142 may be less than or equal to half the width w4 of the second electrode portion 141. In case that the condition is satisfied, the second lead-out portions 142 of the two second internal electrodes 140, which are disposed adjacent to each other in the stacking direction, do not include portions that overlap each other in the stacking direction.

At least one slit 133 or 143 may be positioned in each of the first and second lead-out portions 132 and 142. The first and second lead-out portions 132 and 142 may each be divided into at least two parts by the slits 133 and 143. For example, the first and second lead-out portions 132 and 142 may each be divided into three parts by the two slits 133 and 143. The slits 133 and 143 may each have a bar shape parallel to the first direction. The three parts divided by the two slits 133 and 143 may be positioned at distances in the second direction.

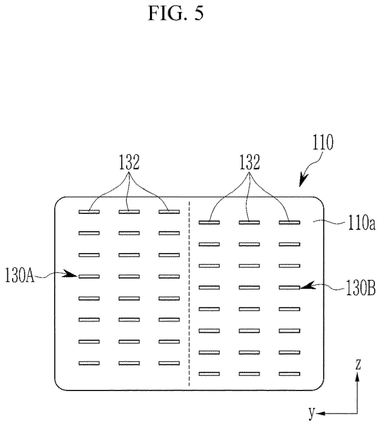

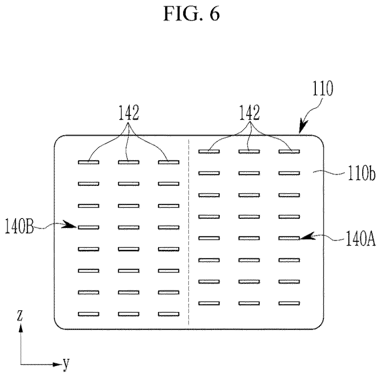

FIG. 5 is a left side view of the capacitor body of the electronic component illustrated in FIG. 1, and FIG. 6 is a right side view of the capacitor body of the electronic component illustrated in FIG. 1.

With reference to FIGS. 2 to 6, among the plurality of first internal electrodes 130, the first lead-out portions 132 of the two first internal electrodes 130, which are disposed adjacent to each other in the stacking direction, may be positioned in a staggered manner in the planar direction. That is, the first lead-out portions 132 of the two first internal electrodes 130, which are disposed adjacent to each other in the stacking direction, may be positioned in a staggered manner in the second direction without overlapping each other in the stacking direction.

Depending on the stacking order, the plurality of first internal electrodes 130 may be classified into odd-numbered first internal electrodes 130A and even-numbered first internal electrodes 130B, and the first surface 110a of the capacitor body 110 may be divided into a left region and a right region. The dotted line in FIG. 5 indicates an imaginary line that separates the left region and the right region of the first surface 110a.

The first lead-out portions 132 of the odd-numbered first internal electrodes 130A may be positioned in one side region (the left region in FIG. 5) of the left and right regions of the first surface 110a. The first lead-out portions 132 of the even-numbered first internal electrodes 130B may be positioned in the other side region (the right region in FIG. 5) of the left and right regions of the first surface 110a.

The first lead-out portions 132 of the odd-numbered first internal electrodes 130A may overlap one another in the stacking direction. The first lead-out portions 132 of the even-numbered first internal electrodes 130B may overlap one another in the stacking direction. The first lead-out portions 132 of the first internal electrodes 130 may be divided into the plurality of parts by the slits 133 and positioned in a staggered manner one by one while being distributed to the two opposite left and right sides of the first surface 110a of the capacitor body 110.

The second lead-out portions 142 of the two second internal electrodes 140, which are disposed adjacent to each other in the stacking direction among the plurality of second internal electrodes 140, may be positioned in a staggered manner in the planar direction. That is, the second lead-out portions 142 of the two second internal electrodes 140, which are disposed adjacent to each other in the stacking direction, are positioned in a staggered manner in the second direction without overlapping each other in the stacking direction.

Depending on the stacking order, the plurality of second internal electrodes 140 may be classified into odd-numbered second internal electrodes 140A and even-numbered second internal electrodes 140B, and the second surface 110b of the capacitor body 110 may be divided into left and right regions. The dotted line in FIG. 6 indicates an imaginary line that separates the left and right regions of the second surface 110b.

The second lead-out portions 142 of the odd-numbered second internal electrodes 140A may be positioned in one side region (the right region in FIG. 6) of the left and right regions of the second surface 110b. The second lead-out portions 142 of the even-numbered second internal electrodes 140B may be positioned in the other side region (the left region in FIG. 6) of the left and right regions of the second surface 110b.

The second lead-out portions 142 of the odd-numbered second internal electrodes 140A may overlap one another in the stacking direction. The second lead-out portions 142 of the even-numbered second internal electrodes 140B may overlap one another in the stacking direction. The second lead-out portions 142 of the second internal electrodes 140 may be divided into the plurality of parts by the slits 143 and positioned in a staggered manner one by one while being distributed to the two opposite left and right sides of the second surface 110b of the capacitor body 110.

The electronic component 100 according to the embodiment may widely disperse stress and prevent the concentration of residual stress on the first and second lead-out portions 132 and 142 by means of the configuration in which the first and second lead-out portions 132 and 142 are divided by the slits 133 and 143 and the configuration in which the first and second lead-out portions 132 and 142 are separated and positioned in a staggered manner one by one and distributed to the two opposite left and right sides of each of the first and second surfaces 110a and 110b of the capacitor body 110. Therefore, the electronic component 100 according to the embodiment may effectively inhibit a crack from being formed in the interfaces between the dielectric layer 120 and the internal electrodes 130 and 140.

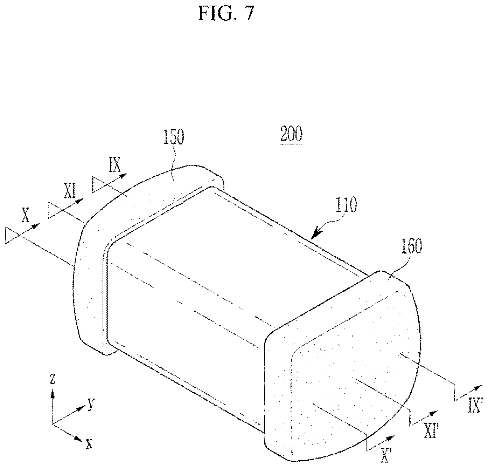

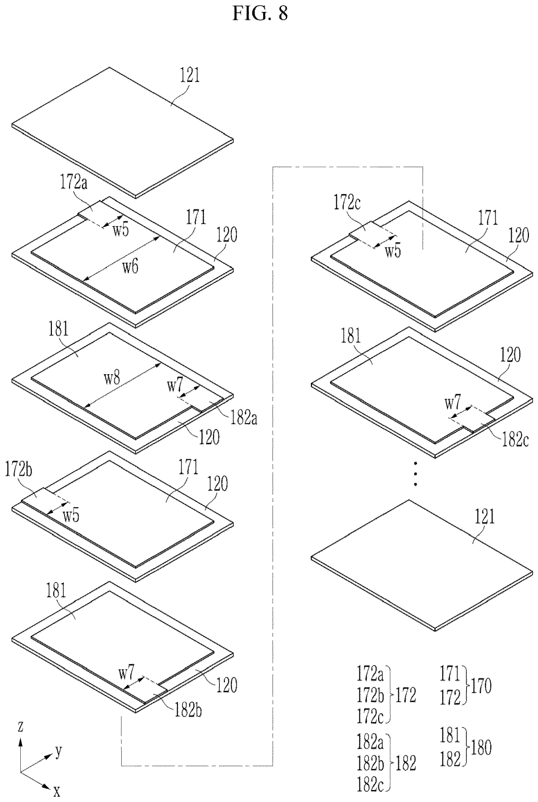

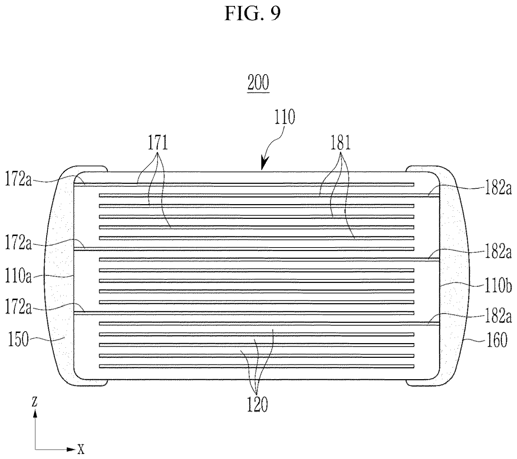

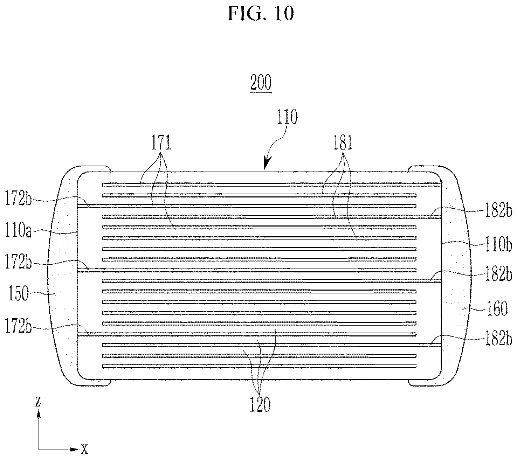

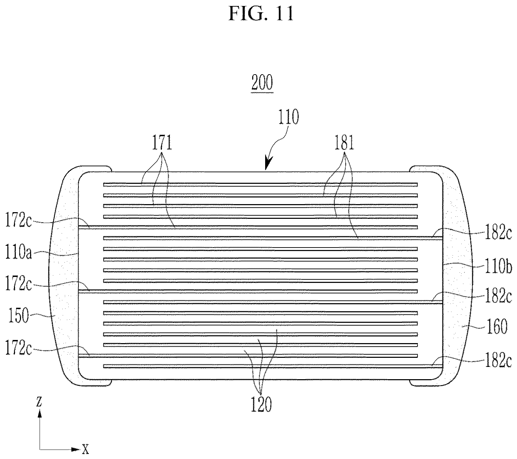

FIG. 7 is a perspective view illustrating an electronic component according to another embodiment, and FIG. 8 is an exploded perspective view of a capacitor body of the electronic component illustrated in FIG. 7. FIG. 9 is a cross-sectional view of the electronic component taken along line IX-IX' in FIG. 7, and FIG. 10 is a cross-sectional view of the electronic component taken along line X-X' in FIG. 7. FIG. 11 is a cross-sectional view of the electronic component taken along line XI-XI' in FIG. 7.

With reference to FIGS. 7 to 11, an electronic component 200 according to the present embodiment may include the same basic configuration as the electronic component 100 according to the embodiment described with reference to FIGS. 1 to 6, except for first and second lead-out portions 172 and 182 to be described below.

In the electronic component 200 according to the present embodiment, a first internal electrode 170 includes a first electrode portion 171, and the first lead-out portion 172 extending from the first electrode portion 171 toward the first surface 110a. A second internal electrode 180 includes a second electrode portion 181, and the second lead-out portion 182 extending from the second electrode portion 181 toward the second surface 110b. Because the first and second electrode portions 171 and 181 are identical in configuration to the first and second electrode portions 131 and 141 described with reference to FIGS. 1 to 6, a repeated description thereof will be omitted.

The first lead-out portion 172 may adjoin the first electrode portion 171 at one side edge directed toward the first surface 110a of the capacitor body 110 among the four edges of the first electrode portion 171. The first lead-out portions 172 of the three first internal electrodes 170, which are disposed adjacent to one another in the stacking direction among the plurality of first internal electrodes 170, may be positioned in a staggered manner in the planar direction. That is, the three first lead-out portions 172, which are disposed adjacent to one another in the stacking direction, may be positioned in a staggered manner in the second direction without overlapping one another in the stacking direction.

The second lead-out portion 182 may adjoin the second electrode portion 181 at one side edge directed toward the second surface 110b of the capacitor body 110 among the four edges of the second electrode portion 181. The second lead-out portions 182 of the three second internal electrodes 180, which are disposed adjacent to one another in the stacking direction among the plurality of second internal electrodes 180, may be positioned in a staggered manner in the planar direction. That is, the three second lead-out portions 182, which are disposed adjacent to one another in the stacking direction, may be positioned in a staggered manner in the second direction without overlapping one another in the stacking direction.

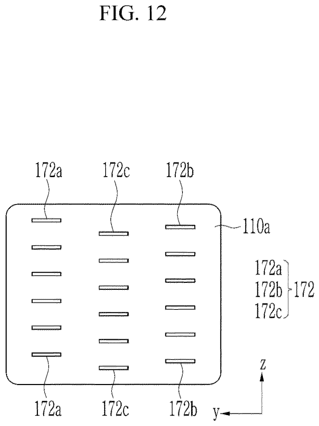

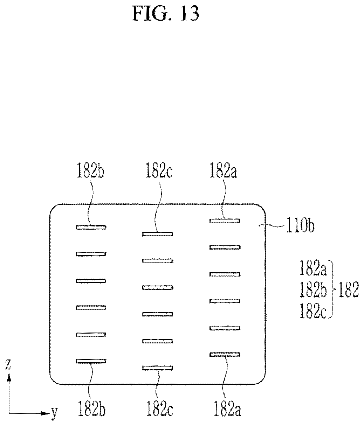

FIG. 12 is a left side view of the capacitor body of the electronic component illustrated in FIG. 7, and FIG. 13 is a right side view of the capacitor body of the electronic component illustrated in FIG. 7.

With reference to FIGS. 8 to 13, the first lead-out portions 172 may include a first side lead-out portion 172a configured to adjoin one side edge portion of the first electrode portion 171, a second side lead-out portion 172b configured to adjoin the other side edge portion of the first electrode portion 171, and a first center lead-out portion 172c configured to adjoin a central portion of the first electrode portion 171. In this case, one side edge portion may be one of left and right edge portions of the first electrode portion 171, and the other side edge portion may be the other of the left and right edge portions of the first electrode portion 171.

In the first surface 110a of the capacitor body 110, the first side lead-out portion 172a, the second side lead-out portion 172b, and the first center lead-out portion 172c may be sequentially positioned in the stacking direction. The first side lead-out portion 172a, the second side lead-out portion 172b, and the first center lead-out portion 172c may have the same width. A width w5 of each of a first side lead-out portion 171a, the second side lead-out portion 172b, and the first center lead-out portion 172c may be less than or equal to one-third of a width w6 of the first electrode portion 171 in the second direction. When the conditions are satisfied, the first side lead-out portion 172a, the second side lead-out portion 172b, and the first center lead-out portion 172c do not include portions that overlap one another in the stacking direction.

The second lead-out portions 182 may include a third side lead-out portion 182a configured to adjoin one side edge portion of the second electrode portion 181, a fourth side lead-out portion 182b configured to adjoin the other side edge portion of the second electrode portion 181, and a second center lead-out portion 182c configured to adjoin a central portion of the second electrode portion 181. In this case, one side edge portion may be one of left and right edge portions of the second electrode portion 181, and the other side edge portion may be the other of the left and right edge portions of the second electrode portion 181.

In the second surface 110b of the capacitor body 110, the third side lead-out portion 182a, the fourth side lead-out portion 182b, and the second center lead-out portion 182c may be sequentially positioned in the stacking direction. The third side lead-out portion 182a, the fourth side lead-out portion 182b, and the second center lead-out portion 182c may have the same width. A width w7 of each of the third side lead-out portion 182a, the fourth side lead-out portion 182b, and the second center lead-out portion 182c may be less than or equal to one-third of a width w8 of the second electrode portion 181 in the second direction. When the conditions are satisfied, the third side lead-out portion 182a, the fourth side lead-out portion 182b, and the second center lead-out portion 182c do not include portions that overlap one another in the stacking direction.

The first side lead-out portion 182a may face the third side lead-out portion 172a in the first direction. The fourth side lead-out portion 182b may face the fourth side lead-out portion 172b in the first direction. The first center lead-out portion 182c may face the second center lead-out portion 172c in the first direction.

The electronic component according to the present embodiment may effectively disperse residual stress, which is concentrated on the first and second lead-out portions 172 and 182, by means of the configuration in which the first and second lead-out portions 172 and 182 are separated and disposed at the three different position and the configuration in which the first and second lead-out portions 172 and 182 are sequentially disposed at one side edge, the other side edge, and the central portion of the first and second electrode portions 171 and 181 in the stacking direction and adjoin the first and second electrode portions 171 and 181.

Specifically, the first side lead-out portion 172a and the second side lead-out portion 172b are disposed opposite to each other. A distance between the first side lead-out portion 172a and the second side lead-out portion 172b may be larger than a width of the first center lead-out portion 172c. The first side lead-out portion 172a and the second side lead-out portion 172b, which are positioned opposite to each other in the second direction, are disposed adjacent to each other in the stacking direction. The first center lead-out portion 172c is disposed in the stacking direction next to the second side lead-out portion 172b. The second lead-out portion 182 is also disposed to have the same configuration as the first lead-out portion 172.

The above-mentioned configuration allows the two lead-out portions, which are disposed adjacent to each other in the stacking direction, to be positioned to be farthest from each other in the planar direction. In addition, in comparison with the configuration in which the three lead-out portions are sequentially disposed at one side edge, the central portion, and the other side edge of the electrode portion in the stacking direction and adjoin the electrode portion, the configuration of the first and second lead-out portions 172 and 182 according to the present embodiment eventually scatters the three lead-out portions irregularly, which may effectively disperse residual stress concentrated on the first and second lead-out portions 172 and 182.

While the embodiments of the present disclosure have been described above, the present disclosure is not limited thereto, and various modifications can be made and carried out within the scope of the claims, the detailed description of the invention, and the accompanying drawings, and also fall within the scope of the present disclosure.

**The following is a list of further preferred embodiments of the invention:**
Embodiment 1: An electronic component comprising:
   a capacitor body comprising a dielectric layer, and a plurality of internal electrodes disposed to be spaced apart from one another in a stacking direction with the dielectric layer interposed therebetween; and
   first and second external electrodes respectively positioned at two opposite ends of the capacitor body opposing each other in a first direction,
   wherein the plurality of internal electrodes each comprise an electrode portion, and a lead-out portion extending from the electrode portion toward a corresponding one of the first and second external electrodes and divided into at least two parts by a slit,
   wherein the plurality of internal electrodes include a first electrode group and a second electrode group alternately disposed in the stacking direction and respectively connected to the first and second external electrodes, and
   wherein the lead-out portions of the two internal electrodes disposed adjacent to each other in the stacking direction in the first electrode group are positioned in a staggered manner in a second direction orthogonal to the first direction, and the lead-out portions of the two internal electrodes disposed adjacent to each other in the stacking direction in the second electrode group are positioned in a staggered manner in the second direction orthogonal to the first direction.
Embodiment 2: The electronic component of embodiment 1, wherein:
   the lead-out portions of the two internal electrodes, of the same one of the first electrode group and the second electrode group, disposed adjacent to each other in the stacking direction, do not overlap in the stacking direction.
Embodiment 3: The electronic component of embodiment 1, wherein:
   the at least two parts of the lead-out portion, which are divided by the slit, are disposed at a distance in the second direction.
Embodiment 4: The electronic component of embodiment 1, wherein:
   the plurality of internal electrodes comprises a plurality of first internal electrodes included in the first electrode group, and a plurality of second internal electrodes included in the second electrode group,
   wherein the plurality of first internal electrodes each comprise a first electrode portion, and a first lead-out portion extending from the first electrode portion toward the first surface, and
   wherein the plurality of second internal electrodes each comprise a second electrode portion, and a second lead-out portion extending from the second electrode portion toward the second surface.
Embodiment 5: The electronic component of embodiment 4, wherein:
   the first lead-out portions of two first internal electrodes disposed adjacent to each other in the stacking direction do not overlap in the stacking direction, and the second lead-out portions of the two second internal electrodes disposed adjacent to each other in the stacking direction do not overlap in the stacking direction.
Embodiment 6: The electronic component of embodiment 5, wherein:
   a width of each of the first lead-out portions is less than or equal to half a width of the first electrode portion in the second direction, and
   wherein a width of each of the second lead-out portions is less than or equal to half a width of the second electrode portion in the second direction.
Embodiment 7: The electronic component of embodiment 5, wherein:
   the at least two parts of each of the first lead-out portions and the second lead-out portions, which are divided by the slit, are positioned at a distance in the second direction.
Embodiment 8: The electronic component of embodiment 4, wherein:
   the plurality of first internal electrodes include odd-numbered first internal electrodes and even-numbered first internal electrodes depending on the stacking order, and
   wherein the first lead-out portions of the odd-numbered first internal electrodes are positioned in one of left and right regions of the first surface, and the first lead-out portions of the even-numbered first internal electrodes are positioned in the other of the left and right regions of the first surface.
Embodiment 9: The electronic component of embodiment 8, wherein:
   the plurality of second internal electrodes include odd-numbered second internal electrodes and even-numbered second internal electrodes depending on the stacking order, and
   wherein the second lead-out portions of the odd-numbered second internal electrodes are positioned in one of left and right regions of the second surface, and the second lead-out portions of the even-numbered second internal electrodes are positioned in the other of the left and right regions of the second surface.
Embodiment 10: The electronic component of embodiment 9, wherein:
   the first lead-out portion of the odd-numbered first internal electrode and the second lead-out portion of the odd-numbered second internal electrode face each other in the first direction, and
   wherein the first lead-out portion of the even-numbered first internal electrode and the second lead-out portion of the even-numbered second internal electrode face each other in the first direction.
Embodiment 11: The electronic component of embodiment 1, wherein:
   the slit extends to the corresponding one of the first and second external electrodes.
Embodiment 12: An electronic component comprising:
   a capacitor body comprising a dielectric layer, and a plurality of internal electrodes disposed to be spaced apart from one another in a stacking direction with the dielectric layer interposed therebetween; and
   first and second external electrodes respectively positioned at two opposite ends of the capacitor body,
   wherein the plurality of internal electrodes each comprise an electrode portion, and a lead-out portion extending from the electrode portion toward a corresponding one of the first and second external electrodes,
   wherein the plurality of internal electrodes include a first electrode group and a second electrode group alternately disposed in the stacking direction and respectively connected to the first and second external electrodes, and
   wherein the lead-out portions of the three internal electrodes disposed adjacent to one another in the stacking direction in the first electrode group are sequentially disposed at one side edge portion, the other side edge portion, and a central portion of the electrode portion in the stacking direction, and the lead-out portions of the three internal electrodes disposed adjacent to one another in the stacking direction in the second electrode group are sequentially disposed at one side edge portion, the other side edge portion, and a central portion of the electrode portion in the stacking direction.
Embodiment 13: The electronic component of embodiment 12, wherein:
   the first and second external electrodes are respectively positioned at two opposite ends of the capacitor body that face each other in a first direction, and the one side edge portion, the central portion, and the other side edge portion are positioned side by side in a second direction orthogonal to the first direction.
Embodiment 14: The electronic component of embodiment 12, wherein:
   the capacitor body comprises first and second surfaces that face each other in a first direction,
   wherein the plurality of internal electrodes comprise a plurality of first internal electrodes included in the first electrode group, and a plurality of second internal electrodes included in the second electrode group,
   wherein the plurality of first internal electrodes each comprise a first electrode portion, and a first lead-out portion extending from the first electrode portion toward the first surface, and
   wherein the plurality of second internal electrodes each comprise a second electrode portion, and a second lead-out portion extending from the second electrode portion toward the second surface.
Embodiment 15: The electronic component of embodiment 14, wherein:
   the first lead-out portions comprise a first side lead-out portion configured to adjoin one side edge portion of the first electrode portion, a second side lead-out portion configured to adjoin the other side edge portion of the first electrode portion, and a first center lead-out portion configured to adjoin a central portion of the first electrode portion, and
   wherein the first side lead-out portion, the second side lead-out portion, and the first center lead-out portion are positioned in a staggered manner in a second direction orthogonal to the first direction.
Embodiment 16: The electronic component of embodiment 15, wherein:
   the second lead-out portions comprise a third side lead-out portion configured to adjoin one side edge portion of the second electrode portion, a fourth side lead-out portion configured to adjoin the other side edge portion of the second electrode portion, and a second center lead-out portion configured to adjoin a central portion of the second electrode portion, and
   wherein the third side lead-out portion, the fourth side lead-out portion, and the second center lead-out portion are positioned in a staggered manner in a second direction orthogonal to the first direction.
Embodiment 17: The electronic component of embodiment 16, wherein:
   a width of each of the first side lead-out portion, the second side lead-out portion, and the first center lead-out portion is less than or equal to one-third of a width of the first electrode portion in the second direction, and
   wherein a width of each of the third side lead-out portion, the fourth side lead-out portion, and the second center lead-out portion is less than or equal to one-third of a width of the second electrode portion in the second direction.
Embodiment 18: The electronic component of embodiment 16, wherein:
   the first side lead-out portion and the third side lead-out portion face each other in the first direction, the second side lead-out portion and the fourth side lead-out portion face each other in the first direction, and the first center lead-out portion and the second center lead-out portion face each other in the first direction.
Embodiment 19: The electronic component of embodiment 12, wherein:
   wherein the lead-out portions of the three internal electrodes disposed adjacent to one another in the stacking direction in the first electrode group do not overlap in the stacking direction, and the lead-out portions of the three internal electrodes disposed adjacent to one another in the stacking direction in the second electrode group do not overlap in the stacking direction.

## Claims

1. An electronic component comprising:
a capacitor body comprising a dielectric layer, and a plurality of internal electrodes disposed to be spaced apart from one another in a stacking direction with the dielectric layer interposed therebetween; and
first and second external electrodes respectively positioned at two opposite ends of the capacitor body opposing each other in a first direction,
wherein the plurality of internal electrodes each comprise an electrode portion, and a lead-out portion extending from the electrode portion toward a corresponding one of the first and second external electrodes and divided into at least two parts by a slit,
wherein the plurality of internal electrodes include a first electrode group and a second electrode group alternately disposed in the stacking direction and respectively connected to the first and second external electrodes, and
wherein the lead-out portions of the two internal electrodes disposed adjacent to each other in the stacking direction in the first electrode group are positioned in a staggered manner in a second direction orthogonal to the first direction, and the lead-out portions of the two internal electrodes disposed adjacent to each other in the stacking direction in the second electrode group are positioned in a staggered manner in the second direction orthogonal to the first direction.

2. The electronic component of claim 1, wherein:
the lead-out portions of the two internal electrodes, of the same one of the first electrode group and the second electrode group, disposed adjacent to each other in the stacking direction, do not overlap in the stacking direction.

3. The electronic component of claim 1 or 2, wherein:
the at least two parts of the lead-out portion, which are divided by the slit, are disposed at a distance in the second direction.

4. The electronic component of one of claims 1 to 3, wherein:
the plurality of internal electrodes comprises a plurality of first internal electrodes included in the first electrode group, and a plurality of second internal electrodes included in the second electrode group,
wherein the plurality of first internal electrodes each comprise a first electrode portion, and a first lead-out portion extending from the first electrode portion toward the first surface, and
wherein the plurality of second internal electrodes each comprise a second electrode portion, and a second lead-out portion extending from the second electrode portion toward the second surface.

5. The electronic component of claim 4, wherein:
the first lead-out portions of two first internal electrodes disposed adjacent to each other in the stacking direction do not overlap in the stacking direction, and the second lead-out portions of the two second internal electrodes disposed adjacent to each other in the stacking direction do not overlap in the stacking direction.

6. The electronic component of claim 5, wherein:
a width of each of the first lead-out portions is less than or equal to half a width of the first electrode portion in the second direction, and
wherein a width of each of the second lead-out portions is less than or equal to half a width of the second electrode portion in the second direction.

7. The electronic component of claim 5, wherein:
the at least two parts of each of the first lead-out portions and the second lead-out portions, which are divided by the slit, are positioned at a distance in the second direction.

8. The electronic component of claim 4, wherein:
the plurality of first internal electrodes include odd-numbered first internal electrodes and even-numbered first internal electrodes depending on the stacking order, and
wherein the first lead-out portions of the odd-numbered first internal electrodes are positioned in one of left and right regions of the first surface, and the first lead-out portions of the even-numbered first internal electrodes are positioned in the other of the left and right regions of the first surface.

9. The electronic component of claim 8, wherein:
the plurality of second internal electrodes include odd-numbered second internal electrodes and even-numbered second internal electrodes depending on the stacking order, and
wherein the second lead-out portions of the odd-numbered second internal electrodes are positioned in one of left and right regions of the second surface, and the second lead-out portions of the even-numbered second internal electrodes are positioned in the other of the left and right regions of the second surface; and/or
wherein:
the first lead-out portion of the odd-numbered first internal electrode and the second lead-out portion of the odd-numbered second internal electrode face each other in the first direction, and
wherein the first lead-out portion of the even-numbered first internal electrode and the second lead-out portion of the even-numbered second internal electrode face each other in the first direction.

10. The electronic component of one of claims 1 to 9, wherein:
the slit extends to the corresponding one of the first and second external electrodes.

11. An electronic component comprising:
a capacitor body comprising a dielectric layer, and a plurality of internal electrodes disposed to be spaced apart from one another in a stacking direction with the dielectric layer interposed therebetween; and
first and second external electrodes respectively positioned at two opposite ends of the capacitor body,
wherein the plurality of internal electrodes each comprise an electrode portion, and a lead-out portion extending from the electrode portion toward a corresponding one of the first and second external electrodes,
wherein the plurality of internal electrodes include a first electrode group and a second electrode group alternately disposed in the stacking direction and respectively connected to the first and second external electrodes, and
wherein the lead-out portions of the three internal electrodes disposed adjacent to one another in the stacking direction in the first electrode group are sequentially disposed at one side edge portion, the other side edge portion, and a central portion of the electrode portion in the stacking direction, and the lead-out portions of the three internal electrodes disposed adjacent to one another in the stacking direction in the second electrode group are sequentially disposed at one side edge portion, the other side edge portion, and a central portion of the electrode portion in the stacking direction.

12. The electronic component of claim 11, wherein:
the first and second external electrodes are respectively positioned at two opposite ends of the capacitor body that face each other in a first direction, and the one side edge portion, the central portion, and the other side edge portion are positioned side by side in a second direction orthogonal to the first direction.

13. The electronic component of claim 11, wherein:
the capacitor body comprises first and second surfaces that face each other in a first direction,
wherein the plurality of internal electrodes comprise a plurality of first internal electrodes included in the first electrode group, and a plurality of second internal electrodes included in the second electrode group,
wherein the plurality of first internal electrodes each comprise a first electrode portion, and a first lead-out portion extending from the first electrode portion toward the first surface, and
wherein the plurality of second internal electrodes each comprise a second electrode portion, and a second lead-out portion extending from the second electrode portion toward the second surface, and/or
wherein:
the first lead-out portions comprise a first side lead-out portion configured to adjoin one side edge portion of the first electrode portion, a second side lead-out portion configured to adjoin the other side edge portion of the first electrode portion, and a first center lead-out portion configured to adjoin a central portion of the first electrode portion, and
wherein the first side lead-out portion, the second side lead-out portion, and the first center lead-out portion are positioned in a staggered manner in a second direction orthogonal to the first direction.

14. The electronic component of claim 13, wherein:
the second lead-out portions comprise a third side lead-out portion configured to adjoin one side edge portion of the second electrode portion, a fourth side lead-out portion configured to adjoin the other side edge portion of the second electrode portion, and a second center lead-out portion configured to adjoin a central portion of the second electrode portion, and
wherein the third side lead-out portion, the fourth side lead-out portion, and the second center lead-out portion are positioned in a staggered manner in a second direction orthogonal to the first direction; and/or
wherein:
a width of each of the first side lead-out portion, the second side lead-out portion, and the first center lead-out portion is less than or equal to one-third of a width of the first electrode portion in the second direction, and
wherein a width of each of the third side lead-out portion, the fourth side lead-out portion, and the second center lead-out portion is less than or equal to one-third of a width of the second electrode portion in the second direction; or
wherein:
the first side lead-out portion and the third side lead-out portion face each other in the first direction, the second side lead-out portion and the fourth side lead-out portion face each other in the first direction, and the first center lead-out portion and the second center lead-out portion face each other in the first direction.

15. The electronic component of claim 11, wherein:
wherein the lead-out portions of the three internal electrodes disposed adjacent to one another in the stacking direction in the first electrode group do not overlap in the stacking direction, and the lead-out portions of the three internal electrodes disposed adjacent to one another in the stacking direction in the second electrode group do not overlap in the stacking direction.
